# EUROPEAN PATENT APPLICATION

(11) **EP 4 496 126 A1**
(43) Date of publication of application: **22.01.2025**
(21) Application number: 24184329.1
(22) Date of filing: 25.06.2024
(51) Int. Cl.: H01Q 21/06, H01Q 3/26

(54) **COMPACT, HYBRID, LOW-COST HIGH-RESOLUTION DUAL-MODE PHASED ARRAY ANTENNA**

(30) Priority: 18.07.2023 US 202363527436 P
(71) Applicant: Honeywell International Inc., Charlotte, NC 28202 (US)
(72) Inventor: SAI, Bin, Charlotte, 28202 (US); EBSV, Charan, Charlotte, 28202 (US); CHIVUKULA, Rajesh, Charlotte, 28202 (US)
(74) Representative: Houghton, Mark Phillip

(57) **Abstract**

An antenna apparatus and a method of operating the antenna apparatus can include a group of receive antenna elements and a transmit antenna array comprising transmit antenna elements, wherein the transmit antenna array is located centrally in a phased array aperture that includes the transmit array antenna and the plurality of receive antenna elements. An isolation area can isolate the transmit antenna array from the receive antenna elements in the phased array aperture, and the phased array aperture can operate with a hybrid dual mode comprising a radar mode and an active beaming steering mode. The radar mode can be a multiple input multiple output (MIMO) radar mode, and the beamforming mode can be an antenna beamforming mode.

## Description

### TECHNICAL FIELD

Embodiments are generally related to antenna devices including phased array apertures. Embodiments also relate to antenna devices and systems and phased array apertures used in the volumetric sensing of non-flat surface mapping. Embodiments also relate to method for operations an antenna device and phased array apertures.

### BACKGROUND

Currently, volumetric measurements of stockpiles of material in custody transfer, process control and inventory monitoring and asset management are typically made using a combination of manual methods and specialized equipment. The specific techniques employed may vary depending on the nature of the material and the requirements of the custody transfer and/or feed control process. Especially in granular solids or material surfaces are fluctuated or not flat, the determination of continuously varying volume in real time is a challenge.

Some commonly used methods involve, for example, physically measuring the dimensions of the stockpile and calculating the volume using mathematical formulas. Measurements may be taken using tape measures, rulers, weight scale or surveying equipment. For irregularly shaped stockpiles, sections may be divided into simpler geometric shapes to estimate the overall volume. This approach can be time-consuming and prone to human errors.

Other techniques involve the use of ground-based Light Detection and Ranging (LiDAR) technology using laser beams to measure distances and create detailed 3D point cloud representations of a stockpile and in some cases, aerial LiDAR systems mounted on aircraft or drones are used to capture 3D data of large stockpiles from above. However, Laser beams are vulnerable in dusty environment and even restrained towards flammable substances. Additional approaches may involve the use of ultrasonic level sensors that measure the level of materials in silos or tanks. By installing multiple sensors at different heights, the level of the stockpile can be estimated. However, this method assumes a consistent material density throughout the stockpile, which may not be accurate for certain materials. Additionally, ultrasonic level sensors may struggle with measuring irregular or non-flat surfaces.

Current level sensing instruments depend on point to point applications (i.e., one dimensional measurements) when the surface is not flat, which is especially true for solids. These level measurements cannot provide for an accurate determination of volume.

Prices of raw materials are going up dramatically. For example, metals/minerals such as aluminum powder have an average price of ca. $6500/m3. Sloughing may cause measurement errors using current level sensors, which in turn can lead to greater than $10K in cost errors. Presently, there also exists a demand for more accurate measurements in open field mining applications due to environmental regulations besides raw material price increase. Thus, there is a demand for real-time automatic volumetric measurements of stockpiles.

Technologies such as current ultrasound, optical technologies, ASIC radar wafer-chip designs and the others mentioned above are a 'no go' because they do not meet key requirements for volumetric measurements of stockpiles of material in custody transfer, process control and inventory monitoring. A few of these requirements include a device that is easy to install and operate (e.g., single installation entry point), along with non-offline re-calibration, non-contact measurements, the ability to operate in harsh conditions (e.g., dust, vapor, temperature), lightweight, and low product development costs.

The present inventors believe that a low-cost high-resolution three-dimensional (3D) volumetric sensing approach for non-flat surface mapping should be developed for applications such as custody transfer of, for example, bulks solids, pastes and powders, the monitoring of, for example, material feeding and loading tanks, and inventory management of granular solids/stockpiles.

There are currently very limited volumetric measurement solutions for real-time accurate 3D volumetric sensing. These solutions either have a poor range and/or unacceptable angular resolutions to profile rough surfaces. These solutions are also non-compact device and costly. Especially for long range applications, this poor angular resolution may lead to lower accuracy and a limited field of view (FOV) for long range operations.

### BRIEF SUMMARY

The following summary is provided to facilitate an understanding of some of the features of the disclosed embodiments and is not intended to be a full description. A full appreciation of the various aspects of the embodiments disclosed herein can be gained by taking the specification, claims, drawings, and abstract as a whole.

It is, therefore, one aspect of the disclosed embodiments to provide for an improved antenna apparatus and methods of operating the antenna apparatus.

It is another aspect of the disclosed embodiments to provide for a low-cost phased array antenna apparatus for measuring and mapping the surface of material to determine an accurate volume for custody transfer and/or (process) inventory control and monitoring.

It is a further aspect of the disclosed embodiments to provide for an antenna apparatus that uses beam steering to scan an entire area of bulk stockpiles and handle obstructive structures inside vessels.

The aforementioned aspects and other objectives can now be achieved as described herein. In an embodiment, an antenna apparatus can include a plurality of receive antenna elements and a transmit antenna array comprising a plurality of transmit antenna elements, wherein the transmit antenna array is located centrally in a phased array aperture that includes the transmit array antenna and the plurality of receive antenna elements; and an isolation area that isolates the transmit antenna array from the plurality of receive antenna elements in the phased array aperture, wherein the phased array aperture operates with a hybrid dual mode comprising a radar mode and an active beaming steering mode.

In an embodiment, the radar mode can comprise a multiple input multiple output (MIMO) radar mode.

In an embodiment, the beamforming mode can comprise an antenna beamforming mode.

In an embodiment, the radar mode can comprise a multiple input multiple output (MIMO) radar mode and the active beam steering mode comprises an antenna instantaneous beamforming mode.

In an embodiment, the element positions of antennal elements among the plurality of receive antenna elements and the plurality of transmit antenna elements can be randomized.

In an embodiment, the phased array aperture can operate in frequencies at or within a range of 24.05-26.5 GHz or 57-64 GHz, or 75 - 85 Ghz.

In an embodiment, the phased array aperture can operate with beam steering in all directions with up to+/-60 degrees scan angle.

In an embodiment, the phased array aperture can comprise a partial phased array aperture comprising multiple different sets of different antennas among the plurality of receive antenna elements and the plurality of transmit antenna elements.

An embodiment can further include a lens associated with at least one of: antenna elements associated with only the plurality of transmit antenna elements or only the plurality of receive antenna elements; or antenna elements associated with all of the plurality of transmit antenna elements and all of the plurality of receive antenna elements.

In an embodiment, the phased array aperture can provide for a direct three-dimensional (3D) volumetric measurement of material content having at least one of: varying slope and uneven surfaces.

In an embodiment, a method of operating an antenna apparatus, can involve: providing a plurality of receive antenna elements and a transmit antenna array comprising a plurality of transmit antenna elements, wherein the transmit antenna array is located centrally in a phased array aperture that includes the transmit array antenna and the plurality of receive antenna elements; and operating the phased array aperture with a hybrid dual mode comprising a radar mode and an active beaming steering mode, wherein the phased array aperture includes an isolation area that isolates the transmit antenna array from the plurality of receive antenna elements in the phased array aperture.

In an embodiment of the method, the radar mode can comprise a multiple input multiple output (MIMO) radar mode.

In an embodiment of the method, the beamforming mode can comprise an antenna beamforming mode.

In an embodiment of the method, the radar mode can comprise a multiple input multiple output (MIMO) radar mode; and the active beam steering mode can comprise an antenna instantaneous beamforming mode.

In an embodiment of the method, element positions of antennal elements among the plurality of receive antenna elements and the plurality of transmit antenna elements can be randomized.

An embodiment of the method can involve operating the phased array aperture in frequencies at or within a range of 24.05-26.5 GHz or 57-64 GHz, or 75 - 85 Ghz.

An embodiment of the method can involve operating the phased array aperture with beam steering in all directions with up to+/-60 degrees scan angle.

An embodiment of the method can involve providing a lens associated with at least one of: antenna elements associated with only the plurality of transmit antenna elements or only the plurality of receive antenna elements; or antenna elements associated with all of the plurality of transmit antenna elements and all of the plurality of receive antenna elements.

An embodiment of the method can involve performing a direct three-dimensional (3D) volumetric measurement of material content having at least one of: varying slope and uneven surfaces, wherein the phased array aperture provides for the direct three-dimensional (3D) volumetric measurement of the material content.

### BRIEF DESCRIPTION OF THE DRAWINGS

The accompanying figures, in which like reference numerals refer to identical or functionally similar elements throughout the separate views and which are incorporated in and form a part of the specification, further illustrate the present invention and, together with the detailed description of the invention, serve to explain the principles of the present invention.
FIG. 1 illustrates layout of an example randomized physical array with 18 Tx by 24 Rx elements, in accordance with an embodiment;
FIG. 2 illustrates a layout of an example realized MIMO virtual array for an antenna apparatus with 432 Rx elements, in accordance with an embodiment.
FIG. 3 illustrates layouts of an example fully filled array and a randomized array, in accordance with an embodiment;
FIG. 4 illustrates layouts related to an example realized virtual aperture, in accordance with an embodiment;
FIG. 5 illustrates a layout of an example transmit reduced array, in accordance with an embodiment;
FIG. 6 illustrates a group of graphs depicting data indicative of example randomized array patterns, in accordance with an embodiment;
FIG. 7 illustrates schematic diagrams depicting example grating lobe formation in Tx beamforming, in accordance with an embodiment;
FIG. 8 illustrates a top view of the topology of an antenna apparatus, in accordance with an embodiment;
FIG. 9 illustrates an isometric view of the antenna apparatus shown in FIG. 8, in accordance with an embodiment;
FIG. 10 illustrates graphs depicting data indicative of example virtual array antenna patterns, in accordance with an embodiment;
FIG. 11 illustrates a graph depicting data indicative of example virtual array scan patterns, in accordance with an embodiment;
FIG. 12 illustrates various charts of example theta 60° scan performance in different phi planes, in accordance with an embodiment;
FIG. 13 illustrates a schematic diagram depicting a top view of an antenna apparatus, in accordance with an embodiment; see comments on the fig 13 where some Rx sections will be corrected by Rajesh.
FIG. 14 illustrates a schematic diagram of an antenna apparatus with grating lobe production, in accordance with an embodiment;
FIG. 15 illustrates a schematic diagram of an antenna apparatus with grating lobe production with a lens, in accordance with an embodiment.

Identical or similar parts or elements in the figures may be indicated by the same reference numerals.

### DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other issues, subject matter may be embodied as methods, devices, components, or systems. Accordingly, embodiments may, for example, take the form of hardware, software, firmware, or a combination thereof. The following detailed description is, therefore, not intended to be interpreted in a limiting sense.

Throughout the specification and claims, terms may have nuanced meanings suggested or implied in context beyond an explicitly stated meaning. Likewise, phrases such as "in an embodiment" or "in one embodiment" or "in an example embodiment" and variations thereof as utilized herein may or may not necessarily refer to the same embodiment and the phrase "in another embodiment" or "in another example embodiment" and variations thereof as utilized herein may or may not necessarily refer to a different embodiment. It is intended, for example, that claimed subject matter include combinations of example embodiments in whole or in part.

In general, terminology may be understood, at least in part, from usage in context. For example, terms such as "and," "or," or "and/or" as used herein may include a variety of meanings that may depend, at least in part, upon the context in which such terms are used. Generally, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms such as "a," "an," or "the", again, may be understood to convey a singular usage or to convey a plural usage, depending at least in part upon context. Furthermore, the term "at least one" as used herein, may refer to "one or more." For example, "at least one widget" may refer to "one or more widgets."

In addition, the term "based on" may be understood as not necessarily intended to convey an exclusive set of factors and may, instead, allow for existence of additional factors not necessarily expressly described, again, depending at least in part on context.

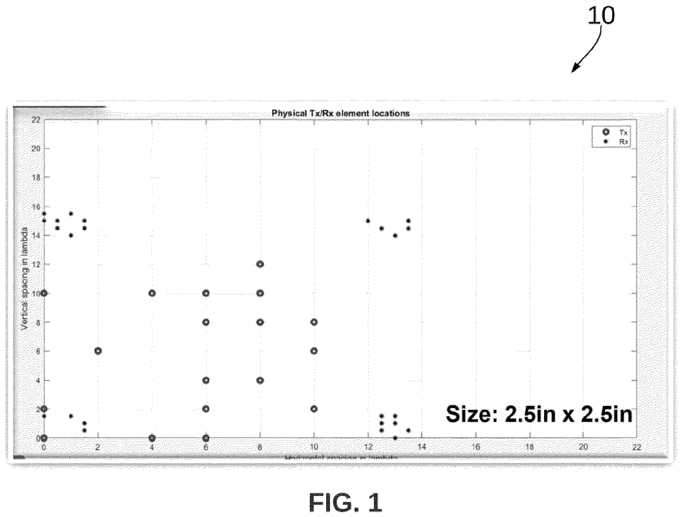

FIG. 1 illustrates a layout 10 of an example randomized physical array of antenna apparatus with 18 Tx by 24 Rx elements, in accordance with an embodiment. The layout 10 shown in FIG. 1 demonstrates the concept of a partial MIMO array configuration. The larger dots shown in the layout 10 correspond to a partial Tx array and the black dots correspond to a partial Rx array. In some embodiments, Rx arrays may be placed in four locations around a Tx array. Note that as utilized herein, in the context of antennas, "Tx" refers to the transmitter antenna (also referred to as a transmit antenna), which is responsible for transmitting signals, while "Rx" refers to the receiver antenna (also referred to as a receive antenna), which is responsible for receiving signals. An important difference between the Tx and Rx antennas lies in their design and functionality.

The Tx array associated with the data depicted in the layout 10 can include, for example, 18 elements/channels (spaced 2λ) achieved after a 57% reduction (from a maximum of 42 elements/channels in a fully filled aperture). The Rx array associated with layout 10 can include, for example, 24 elements/channels (spaced (0.5λ) and can achieve a 62.5% reduction (compared to 64 elements/channels of full array).

Note that the term 'aperture' as utilized herein relates to an 'antenna aperture' which refers to the effective area through which an antenna can receives or radiate electromagnetic waves. It is the physical opening or surface that captures or emits the electromagnetic energy. The size and characteristics of the aperture play a crucial role in determining the performance of an antenna.

In a receiving mode, the incoming electromagnetic waves are captured and converted into electrical signals. The larger the aperture, the higher the gain of the antenna will be, which results in increased SNR at the receiver. Also, the larger the aperture, narrower the beam angle, the higher the special resolution to resolve closely located targets. The aperture determines the antenna's ability to capture signals from a specific direction with the corresponding beam angle.

In a transmitting mode, the antenna aperture is responsible for radiating the electromagnetic waves generated by the antenna's electrical signals. The size and shape of the aperture influence the radiation pattern, beamwidth, and directivity of the antenna. A larger aperture generally leads to narrower beamwidth and higher directivity, allowing the antenna to focus the energy in a specific direction or achieve greater gain.

The aperture can vary in shape depending on the antenna design. For example, in a parabolic antenna, the aperture is circular and corresponds to the curved surface of the dish. In a slot antenna, the aperture is a slot or opening through which the waves are radiated or received. In general, the aperture shape and size are carefully designed to optimize the antenna's performance for specific applications and frequency ranges.

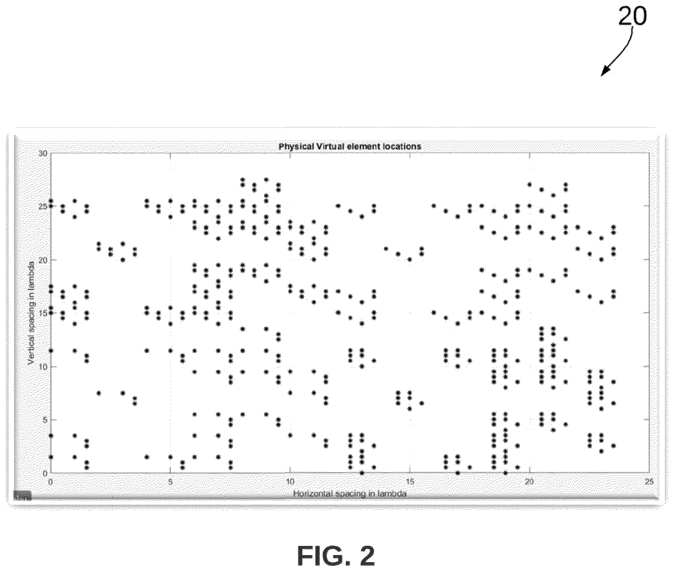

FIG. 2 illustrates a layout 20 of an example realized MIMO (Multiple-Input Multiple-Output) virtual array for an antenna apparatus with 432 Rx elements, in accordance with an embodiment. The layout 20 of FIG. 2 depicts the partial virtual array obtained by MIMO analysis of the array associated with the data displayed in layout 10 of FIG. 1. Layout 20 of FIG. 2 indicates that the array occupies 16λ x 16λ aperture with only 432 elements (e.g., as compared to 2688 elements needed to fully populate this space with half lambda spacing).

Note that a MIMO (Multiple-Input Multiple-Output) virtual array refers to a computational and signal processing technique that can be used to obtain the behavior and characteristics of an equivalent physical MIMO antenna array without physically implementing the array itself. It is a concept that can be employed in wireless communication systems.

Layout 10 and layout 20 demonstrate that the array can achieve the optimum gain, beamwidth and side lobe performance in the field of view (FOV), showing its potential for phased array level sensing applications.

In another embodiment, the percentage reduction of elements noted above, among other factors such as elements spacings, orientations, etc., can be changed to achieve optimum performance of the realized virtual array. The realized virtual aperture may be in some embodiments 28λ x 24λ in size with virtual array element spacing of 0.5λ. This can achieve 1.8° beam width in vertical and 2.1 ° beamwidth in Horizontal directions.

The realized MIMO virtual array can also scan from boresight to any angle within ± 60° as will be discussed in greater detail herein. Although the gain of the partial virtual aperture reduces compared to full aperture by 8dB due to a fewer number of active elements, this, however, may be acceptable in level sensing with proper signal processing schemes to compensate.

Note that the term 'boresight' as utilized herein can relate to the direction or axis along which the antenna's main lobe or maximum radiation pattern is centered. It represents the ideal line of sight or the reference direction of the antenna. The term 'virtual array' or 'virtual antenna array' as utilized herein can relate to a computational approach that can emulate and obtain the behavior of an equivalent physical antenna array, offering flexibility, cost-effectiveness, and adaptability in signal processing and wireless communication systems.

Advantages to this approach can be achieved with beam resolution and a two-dimensional (2D) scanning range of ± 60⁰ with only 18 Tx elements and 24 Rx elements requiring only 6 RFIC chips (e.g., compared to 14 or more chips for a full array). Additionally, the antenna aperture discussed herein can provide the opportunity for transmit beam steering in the previously mentioned FOV of ± 20⁰ which may be useful in longer range applications (e.g., > 50m) where higher gain from beamforming provides improved reflectivity for long range targets.

Additionally, Tx BF can be performed using a certain set of transmit antenna elements or a full set of the transmit antenna elements. In some embodiments, the transmit and receive antenna elements can be realized using a shaped lens radome for individual antenna elements or a combined lens for the transmit elements and a separate lens for each of the receive aperture.

Note that the term 'array' as utilized herein can relate to an antenna array. In the context of an antenna array, 'array' can refer to a collection of multiple individual antenna elements that are spatially arranged and working together to achieve desired radiation characteristics. Each antenna element (also referred to sometimes simply as an 'element') in the array is a separate radiating element that can transmit or receive electromagnetic waves. The arrangement of these elements can vary depending on the specific application and desired performance.

Antenna arrays can be designed to enhance the overall performance of the antenna system by providing improved directivity, gain, beam steering, or other desired properties. By combining the signals from multiple antenna elements, an array can achieve beamforming, which allows focusing the radiation pattern in a specific direction or forming multiple beams simultaneously.

The antenna elements in an array may be identical and uniformly spaced to facilitate coherent combining of signals. The spacing between the elements is crucial and is often a fraction of the operating wavelength to ensure proper phase relationships between the signals. Various array geometries can be employed, such as linear, planar (rectangular or circular), or even more complex arrangements like conformal arrays.

The characteristics of the antenna array (or simply the 'array'), including its radiation pattern, beamwidth, and sidelobe levels, may depend on the properties of individual antenna elements, their positions, the spacing between them, and the signal processing techniques applied to control the array's behavior.

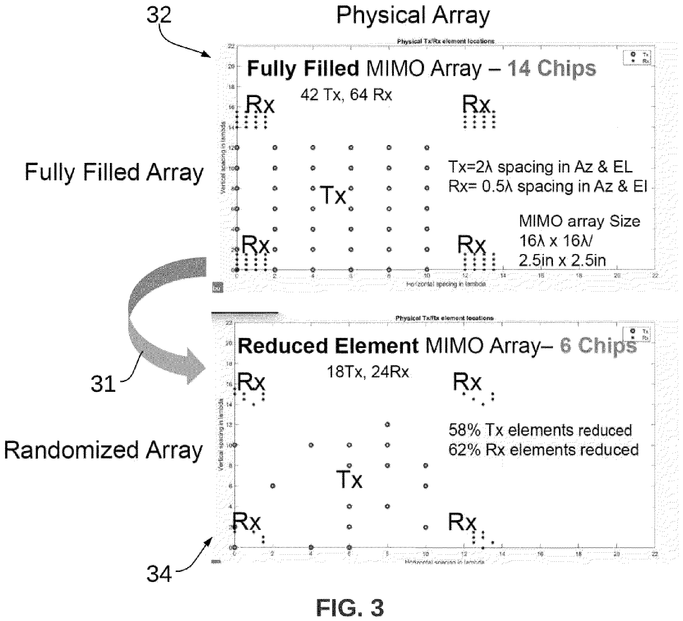

FIG. 3 illustrates layouts 32 and 34, respectively, of an example fully filled array and a randomized array, in accordance with an embodiment. Layout 32 shows data related to an antenna apparatus based on antenna array configured from 14 chips. Vertical spacing in lambda is shown in layout 32 along with an indication of horizontal spacing in lambda. The example MIMO array size associated with the antenna array in layout 32 has a size of 16λ x 16λ and 2.5in x 2.5 in. This is a fully filled array as shown in layout 32.

Layout 34 indicates features of a reduced element MIMO array for an antenna apparatus which is based on an array of 6 chips and with a 58% Tx antenna element reduction and a 62% Rx element reduction. The array associated with graph 24 is a randomized array for the antenna apparatus.

Note that the term 'chip' as utilized herein may relate to an integrated circuit (IC) chip and in particular to a radio frequency integrated circuit (RFIC), which can be implemented in the context of wireless communication systems and RF applications where high-frequency signals need to be processed. An RFIC can be used for the implementation of functions such as, for example, signal amplification, frequency conversion, filtering, and modulation/demodulation in radio frequency (RF) systems. An RFIC is an integrated circuit designed to handle RF signals, providing various functions required for RF communication and wireless applications. By integrating multiple RF components onto a single chip, RFICs enable compact, cost-effective, and high-performance RF systems.

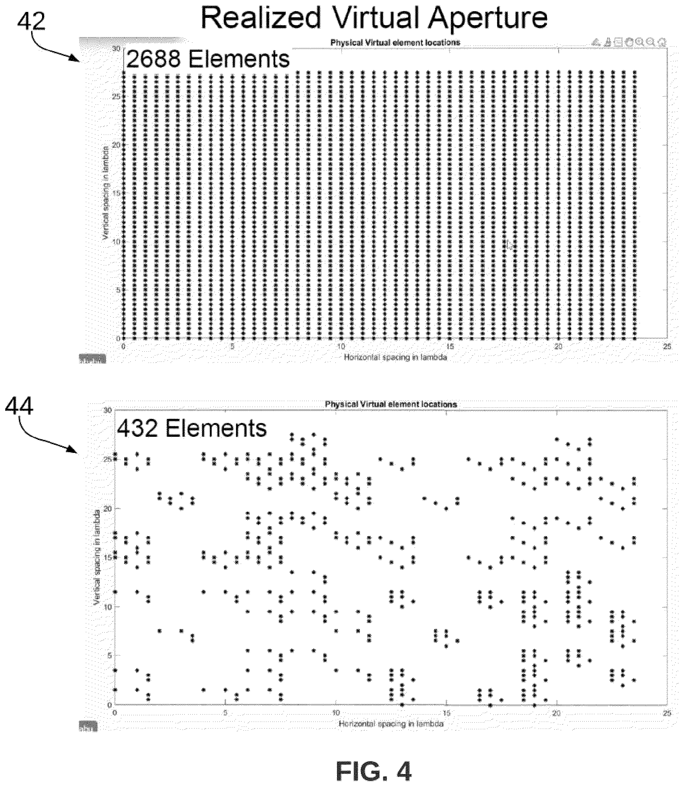

FIG. 4 illustrates layouts 42 and 44 depicting an example realized virtual aperture, in accordance with an embodiment. Layout 42 shows 2688 elements with their physical virtual element locations, while layout 44 shows 432 with their physical virtual element locations.

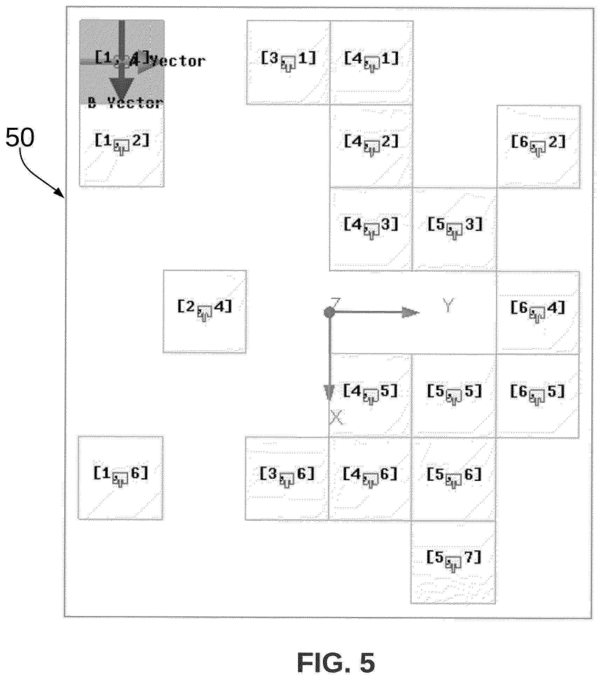

FIG. 5 illustrates a layout 50 of an example transmit reduced array, in accordance with an embodiment. The transmit reduced array of layout 50 shown in FIG. 51 is spaced 2 lambda with 18 elements.

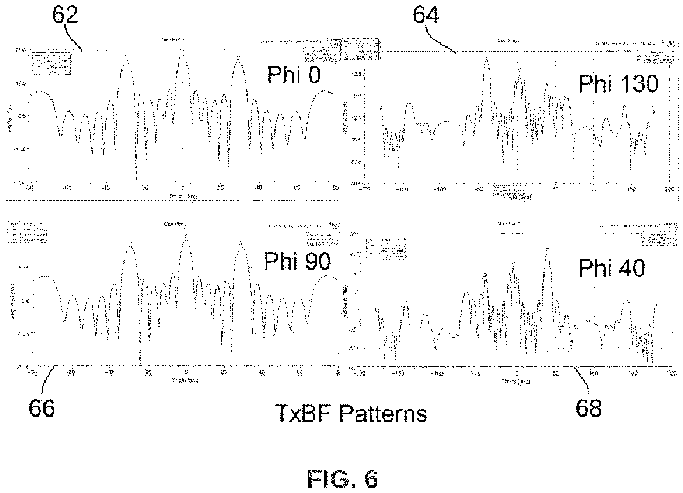

FIG. 6 illustrates a group of graphs 62, 64, 66, and 68 depicting data indicative of example randomized array patterns, in accordance with an embodiment. Graph 62 shows data with a phi 0, while graph 64 indicates data with phi 130. Graph 66 indicates data of phi 90 and graph 68 depicts data of phi 40. The graphs 62, 64, 66, and 68 indicate a minimum sidelobe level of 12.6 dB up to a 40 degrees scan with the grating lobe existing on TxBF as transmitters are spaced 2λ. While the disclosed design variety can generate higher angular resolution, e.g., 2.1° x 1.8° with 0.5λ spacing, and 1.7° x 1.85° with 0.63λ spacing in azimuth, it is a tradeoff between angular resolution and grating lobe level, depending on the application conditions.

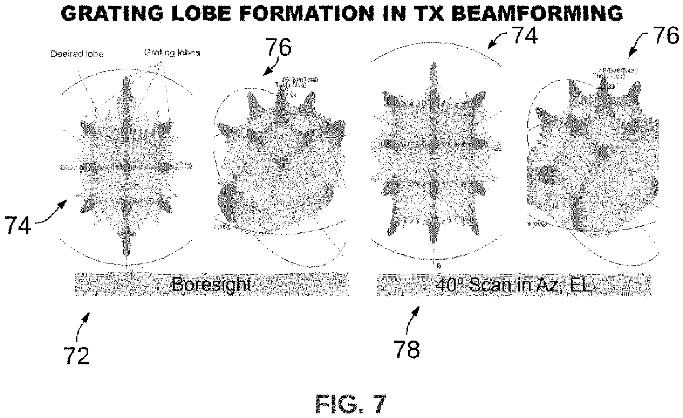

FIG. 7 illustrates schematic diagrams depicting example grating lobe formation in Tx beamforming, in accordance with an embodiment. Grating lobes 72 and 78 are shown in FIG. 7 with the lobes 72 related to boresight and the lobes 78 related to a 40° scan in Az, El. Lobes 72 include lobes 74 and 78, while lobes 78 include lobes 74 and 78 but with the 40° scan in azimuth, elevation. FIG. 7 demonstrates that the antenna apparatus discussed herein can be implemented in the context of embodiments involving a lens antenna for grating lobe reduction.

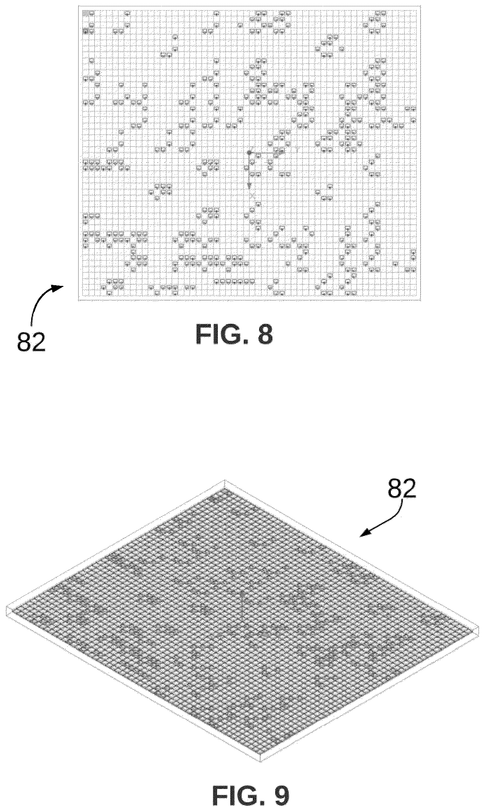

FIG. 8 illustrates a top view of the topology of an example antenna apparatus 82, in accordance with an embodiment. The top view shown in FIG. 8 includes a view of 432 elements populated out of 2688 elements.

FIG. 9 illustrates an isometric view of the antenna apparatus 82 shown in FIG. 8, in accordance with an embodiment.

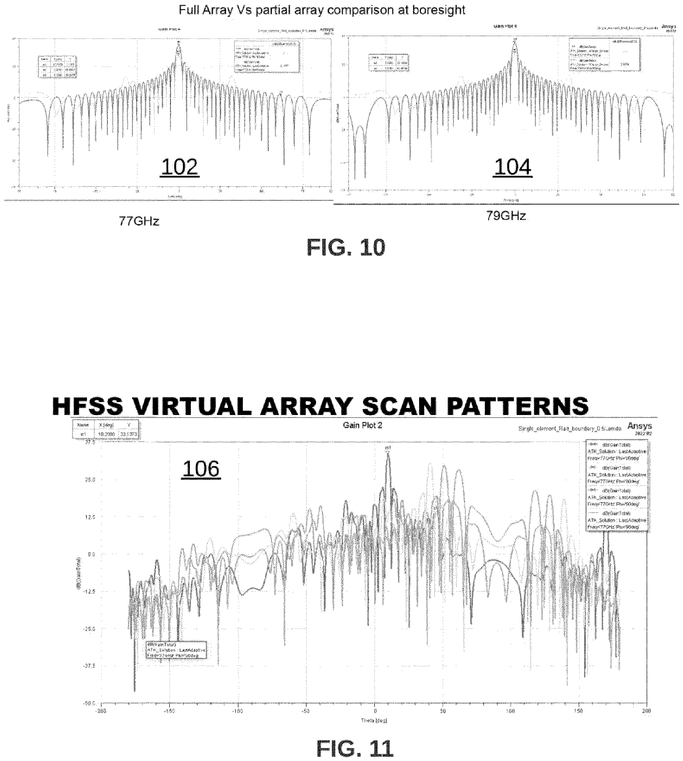

FIG. 10 illustrates graphs 102 and 104 depicting data indicative of example virtual array antenna patterns, in accordance with an embodiment. The graphs 102 and 104 relate to data indicating a fully array versus partial array comparison at boresight. The boresight radiation pattern at 77GHz and 78 Ghz are similar. The graphs 102 and 104 show that full array gain (2688 elements) = 41 dBi, and a partial array gain (432 elements) = 33 dBi.

FIG. 11 illustrates a graph 106 depicting data indicative of example virtual array scan patterns, in accordance with an embodiment. The graph 106 indicates that an example virtual array can scan up to +/- 60° from boresight.

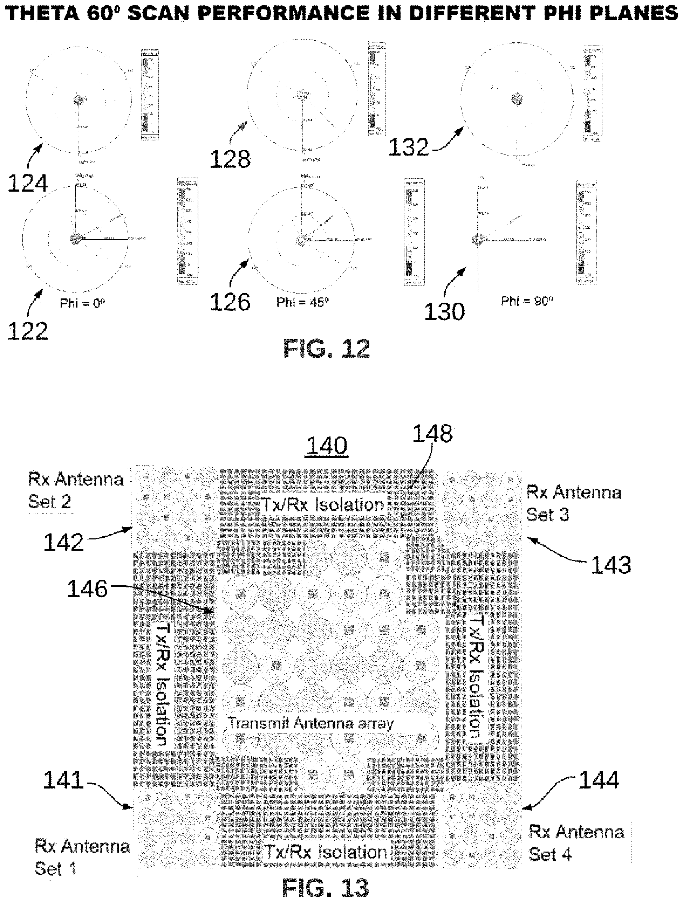

FIG. 12 illustrates various charts of example theta 60° scan performance in different phi planes, in accordance with an embodiment. Charts 122 and 124 relate to Phi = 0°, while charts 126 and 128 relate to Phi = 45°. Charts 130 and 132 relate to Phi = 0°. FIG. 13 indicates that the disclosed randomized array scans +/- 60°. Hence, it is suitable for volumetric mapping.

FIG. 13 illustrates a schematic diagram depicting a top view of an antenna apparatus 140, in accordance with an embodiment. The antenna apparatus 140 can include a group of receive antenna elements 141, 142, 143, 144, which respectively can be grouped into Rx antenna set 1, Rx antenna set 2, Rx antenna set 3, Rx antenna set 4. The antenna apparatus 140 can further include a transmit antenna array 146, which is composed of a group of transmit antenna elements. The transmit antenna array 146 can be centrally located in a phased array aperture that includes the transmit array antenna 146 and the receive antenna elements 141, 142, 143, 144. The antenna apparatus 140 shown in FIG. 13 can be designed and implemented to function as a compact hybrid low-cost high-resolution array antenna.

A Tx/Rx isolation area 148 can isolate the transmit antenna array 146 from the receive antenna elements 141, 142, 143, 144 in the phased array aperture. As discussed herein this phased array aperture and hence the antenna apparatus 140 can operate with a hybrid dual mode comprising a radar mode and a beamforming mode.

The Tx/Rx isolation area 148 can maintain the integrity and quality of received signals by minimizing any interference caused by the transmitted signals within the antenna apparatus 140. The Tx/Rx isolation area 148 can function as a region of the antenna apparatus 140, which can help with minimizing coupling or interference between the transmitter and receiver components. The isolation area is important for preventing the transmitted signal from leaking into the receiver path and causing interference or degradation of the received signal.

The Tx/Rx isolation area 148 can be achieved through a number of different approaches. For example, physically separating the Tx and Rx components within the antenna structure of the antenna apparatus 140 can help reduce interference. This can involve keeping them at different locations or using shielding materials between them. In another embodiment, employing appropriate filters in the antenna design of the antenna apparatus 140 can suppress unwanted signals from reaching the receiver (Rx antenna elements). These filters can be implemented using techniques like frequency-selective surfaces or bandpass filters.

In yet another embodiment, utilizing different polarizations for the transmitter and receiver signals can aid in isolation. By transmitting and receiving signals with orthogonal polarizations, cross-polarization interference can be minimized. In another embodiment, designing the radiation patterns of the Tx and Rx antennas to have minimal overlap in the desired operating frequency range can help reduce interference. Finally, the Tx/Rx isolation area 148 may be achieved by the arrangement of the antenna elements within the aperture, such as using shielding structures or employing specific geometries, which can create isolation zones between the Tx and Rx components.

The antenna apparatus 140 can be implemented in some embodiments as a fully filled array with every element having individual lens. In other embodiments, however, the lens may only be on the Tx elements and not on the Rx elements and vice versa, or without the lens on both the Tx and Rx elements. In yet another embodiment, only a partial array may be utilized reduced elements as discussed previously herein. Such a partial array embodiment may be developed in multiple ways so as to obtain multiple different sets of active TX and Rx elements leading to a different set of virtual array elements.

In an example embodiment, 18 Tx antenna elements and 24 Rx antenna elements may be selected from the aperture of the antenna apparatus 140. Depending on the number of Tx, Rx channels affordable per requirement more Tx, Rx channels may be made active for optimizing the aperture efficiency of the antenna apparatus 140.

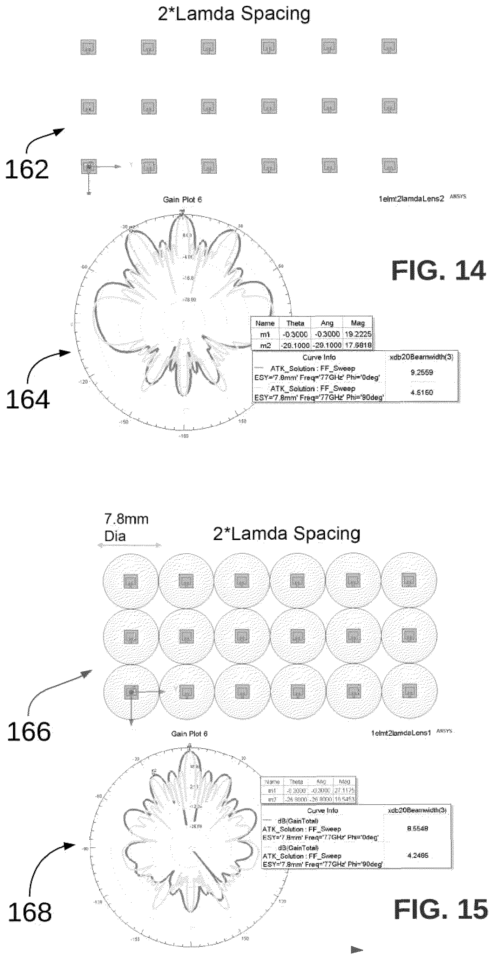

FIG. 14 illustrates a schematic diagram of an antenna apparatus 162 with grating lobe production, in accordance with an embodiment. The example antenna apparatus 162 shown in FIG. 14 has 2* lambda spacing. A gain plot 164 is shown in FIG. 14 and is associated with the example antenna apparatus 162.

FIG. 15 illustrates a schematic diagram of an antenna apparatus 166 with grating lobe production with a lens, in accordance with an embodiment. The example antenna apparatus 166 shown in FIG. 15 has 2* lambda spacing along with a lens diameter of 7.8 mm. A gain plot 164 is shown in FIG. 14 and is associated with the example antenna apparatus 162. FIG. 14 and FIG. 15 demonstrate that grating lobes can be reduced by adding a lens and can improve gain by 8 dB, but the beamwidth does not reduce.

The embodiments can provide a very compact size low cost phased array aperture, with high resolution along with a MIMO radar mode and TX beamforming mode using only, for example, 6 RFICs operating in 76 - 81 GHz to provide beam steering in all directions up to +/-60 degrees scan angle. The embodiments also can combine techniques used in MIMO radar technologies with sparse phased array antenna technology to provide a unique large virtual aperture in MIMO radar mode.

The antenna arrangement in transmit and receive modes can provide for a unique ultralow SWaP-C configuration requiring, for example, only 6 RFICs composed of 3 Transmit/4 Receive Channels each (SWaP-C is an acronym for Size, Weight, Power and Cost. In research and development, it is generally used in reference to optimize the Size, Weight, Power and Cost of a device, system, or program).

This solution can provide low-cost high resolution 3D mapping of non-flat surfaces in industrial volumetric sensing applications. The embodiments can also offer non-contact based measurement, which does not include any moving parts while also covering +/-60 degrees FOV in all directions. Embodiments are also suitable for harsh environments as the actual unit utilized to implement an embodiment can be separated from the contents of the tank by, for example, a hydrophobic radome/lens.

Note that the term 'radome' as utilized herein is short for 'radar dome' and relates to a protective enclosure that can be designed to house and protect radar antennas or other sensitive components from environmental factors such as weather, wind, dust, and debris. It is a structural cover that allows electromagnetic signals to pass through with minimal interference while providing mechanical protection.

A radome can maintain the structural integrity and performance of the enclosed components, such as radar antennas or communication antennas. It can serve as a barrier that can protect the internal components from the external environment, including rain, snow, ice, UV radiation, and wind forces. The term "lens" as used herein in the context of radomes can be used to describe a specific shape or design feature. A lens-shaped radome can refer to a radome that has a convex or concave shape resembling a lens. This design helps focus or direct the electromagnetic signals passing through the radome.

Note that not all radomes are lens-shaped. Radomes can come in various shapes and forms, including cylindrical, hemispherical, or conical designs, depending on the specific application requirements. The choice of radome shape depends on factors such as antenna type, frequency range, desired performance, and environmental conditions. A radome is a protective enclosure for radar antennas or sensitive components, while a lens-shaped radome may relate to a radome with a lens-like shape that can aid in beam shaping and antenna protection.

A hydrophobic radome/lens is a protective covering or enclosure that is used to shield and protect sensitive components, such as antennas or sensors, from the environment, particularly from water or moisture. The term "hydrophobic" refers to the property of repelling or resisting water.

In the context of radomes and lenses, hydrophobic coatings or materials are applied to the surface to make them water-repellent. These hydrophobic surfaces prevent water droplets from adhering to the radome or lens, allowing them to roll off or bead up and not interfere with the performance of the enclosed components.

Unique features of the embodiments include an unconventional array topology by randomizing element positions to achieve more than 50% reduction of Tx and Rx channels for low-cost target. High angular resolutions (e.g., 1.8 x 2.1 degree) can be achieved with a compact antenna size (e.g., 2.5 x 2.5 in) without the lens. Hybrid dual-mode operations can also be achieved in a single antenna to cope with various applications such as long range, high SNR, and narrow beam angle using a small antenna size. The embodiments may be designed and implemented with a significant cost and power reduction, while retaining high-performance. Grating lobe reduction may also be achieved through a combination of randomness and lens implementations as discussed previously.

The disclosed embodiments address the need for low-cost, high-resolution 3D volumetric sensing for non-flat surface mapping in applications such as custody transfer of bulk solids, pastes, and powders.

Custody transfer involves determining the precise quantity of material being transferred from one party to another. Traditional methods rely on manual measurement techniques or simple level sensors, which may not provide accurate volume measurements, especially for non-flat surfaces. High-resolution 3D volumetric sensing can provide more precise measurements, ensuring accurate custody transfer and avoiding disputes or discrepancies.

Bulk solids, pastes, and powders often have irregular or non-flat surfaces. Traditional sensors like level probes or ultrasonic sensors might struggle to accurately measure the volume on such surfaces. By employing 3D volumetric sensing, the system can capture the complete three-dimensional shape of the material, regardless of its surface irregularities, resulting in more accurate volume calculations.

Accurate 3D volumetric sensing can help optimize the filling or loading process by precisely measuring the volume of the material being transferred. This ensures that the correct amount of material is loaded, minimizing waste and avoiding overfilling or underfilling of containers or transportation vehicles.

Non-contact 3D volumetric sensing eliminates the need for physical contact with the material, reducing the risk of accidents or contamination. Additionally, high-resolution sensing enables faster and more efficient transfer operations by providing real-time monitoring and feedback on material levels, allowing for better control and management of the process.

While high-resolution 3D sensing technologies have traditionally been expensive, there is a growing need for low-cost solutions to make them more accessible for various industrial applications. Low-cost high-resolution 3D volumetric sensing can provide accurate measurements at a reasonable price point, making it economically viable for industries involved in custody transfer of bulk solids, pastes, and powders.

Overall, the implementation of low-cost, high-resolution 3D volumetric sensing for non-flat surface mapping in applications like custody transfer of bulk solids, pastes, and powders offers improved accuracy, efficiency, and cost-effectiveness, leading to better process control, reduced waste, and enhanced overall productivity.

It will be appreciated that variations of the above-disclosed and other features and functions, or alternatives thereof, may be desirably combined into many other different systems or applications. It will also be appreciated that various presently unforeseen or unanticipated alternatives, modifications, variations or improvements therein may be subsequently made by those skilled in the art which are also intended to be encompassed by the following claims.

## Claims

1. An antenna apparatus, comprising:
a plurality of receive antenna elements and a transmit antenna array comprising a plurality of transmit antenna elements, wherein the transmit antenna array is located centrally in a phased array aperture that includes the transmit array antenna and the plurality of receive antenna elements; and
an isolation area that isolates the transmit antenna array from the plurality of receive antenna elements in the phased array aperture, wherein the phased array aperture operates with a hybrid dual mode comprising a radar mode and an active beaming steering mode.

2. The antenna apparatus of claim 1 wherein the radar mode comprises a multiple input multiple output (MIMO) radar mode.

3. The antenna apparatus of claim 1 wherein the beamforming mode comprises an antenna beamforming mode.

4. The antenna apparatus of claim 1 wherein:
the radar mode comprises a multiple input multiple output (MIMO) radar mode; and
the active beam steering mode comprises an antenna instantaneous beamforming mode.

5. The antenna apparatus of claim 1 wherein element positions of antennal elements among the plurality of receive antenna elements and the plurality of transmit antenna elements are randomized.

6. The antenna apparatus of claim 1 wherein the phased array aperture operates in frequencies at or within a range of 24.05-26.5 GHz or 57-64 GHz, or 75 - 85 Ghz.

7. The antenna apparatus of claim 1 wherein the phased array aperture operates with beam steering in all directions with up to+/-60 degrees scan angle.

8. The antenna apparatus of claim 1 wherein the phased array aperture comprising a partial phased array aperture comprising multiple different sets of different antennas among the plurality of receive antenna elements and the plurality of transmit antenna elements.

9. A method of operating an antenna apparatus, comprising:
providing a plurality of receive antenna elements and a transmit antenna array comprising a plurality of transmit antenna elements, wherein the transmit antenna array is located centrally in a phased array aperture that includes the transmit array antenna and the plurality of receive antenna elements; and
operating the phased array aperture with a hybrid dual mode comprising a radar mode and an active beaming steering mode, wherein the phased array aperture includes an isolation area that isolates the transmit antenna array from the plurality of receive antenna elements in the phased array aperture.

10. An antenna apparatus, comprising:
a plurality of receive antenna elements and a transmit antenna array comprising a plurality of transmit antenna elements, wherein the transmit antenna array is located centrally in a phased array aperture that includes the transmit array antenna and the plurality of receive antenna elements; and
an isolation area that isolates the transmit antenna array from the plurality of receive antenna elements in the phased array aperture, wherein the phased array aperture operates with a hybrid dual mode comprising a radar mode and an active beaming steering mode, wherein the phased array aperture comprises a partial phased array aperture comprising multiple different sets of different antennas among the plurality of receive antenna elements and the plurality of transmit antenna elements.
